# FASCICULE DE BREVET EUROPEEN

(11) **EP 0 363 283 B1**
(45) Date de publication et mention de la délivrance du brevet: **22.12.1993**
(21) Numéro de dépôt: 89402752.3
(22) Date de dépôt: 05.10.1989
(51) Int. Cl.: F16L 37/12

(54) **Système de raccordement étanche aux fluides**
Fluiddichtes Verbindungssystem
Fluid-tight connector system

(30) Priorité: 07.10.1988 FR 8813178
(43) Date de publication de la demande: 11.04.1990
(73) Titulaire: JAEGER, F-92303 Levallois-Perret (FR)
(72) Inventeur: Colin, Georges, F-77500 Chelles (FR); Filjak, Jean, F-93800 Epinay/Seine (FR)
(74) Mandataire: Martin, Jean-Jacques

(56) Documents cités:
- FR-A- 2 443 015
- US-A- 2 784 987
- US-A- 3 672 708
- US-A- 4 201 407

## Description

La présente invention concerne le domaine des systèmes de raccordement étanche aux fluides.

Plus précisément encore, la présente invention concerne un dispositif de raccordement, étanche aux fluides, sur un embout formé d'un tube cylindrique muni en extrémité d'un bourrelet.

De nombreux dispositifs de raccordement étanches aux fluides ont déjà été proposés.

Toutefois, pour la plupart les dispositifs de raccordement existant actuellement sont complexes, coûteux et non totalement fiables.

Un dispositif de raccordement selon l'art antérieur est décrit par exemple dans le document US-A-2 784 987.

Ce document montre un dispositif de raccordement, étanche aux fluides, comprenant un embout formé d'un tube cylindrique muni en extrémité d'un bourrelet annulaire, un premier élément fendu dans une direction générale longitudinale sur une partie de sa longueur pour former des branches flexibles présentant à leur extrémité un bossage, le premier élément possédant au niveau de sa portion fendue une élasticité suffisante pour franchir élastiquement le bourrelet par ouverture de la fente, un deuxième élément comprenant au moins un fourreau cylindrique dont le diamètre interne est sensiblement complémentaire du diamètre externe du premier élément, dans lequel l'un du premier élément et du deuxième élément est muni d'au moins une saillie sur l'une de ses surfaces, tandis que l'autre du premier élément et du deuxième élément est muni d'au moins une découpe apte à recevoir la saillie pour immobiliser axialement l'embout, le premier élément et le deuxième élément lorsque l'embout et ces deux éléments sont engagés respectivement l'un sur l'autre, et un joint d'étanchéité.

Un tel dispositif de l'art antérieur s'adapte difficilement à tous les types de géométrie d'embouts, notamment ceux qui présentent un bourrelet annulaire de faible longueur. Dans ce cas, le raccordement résiste mal à des efforts de torsion appliqués perpendiculairement à l'axe de l'embout. D'autre part, le moulage des branches flexibles est assez difficile à réaliser.

Un autre dispositif de raccordement, étanche aux fluides, selon l'art antérieur est décrit dans le document US-A-3 672 708.

Ce dispositif montre un dispositif de raccordement, étanche aux fluides, comprenant un embout présentant une partie tubulaire cylindrique, un manchon fendu sur sa longueur ayant un diamètre interne sensiblement complémentaire du diamètre externe de la partie tubulaire de l'embout, en vue d'être enfilé sur la partie tubulaire de l'embout, un élément récepteur comprenant au moins un fourreau cylindrique dont le diamètre interne est sensiblement complémentaire du diamètre externe du manchon, en vue d'accueillir l'embout muni du manchon, le fourreau étant étagé intérieurement pour définir un décrochement dirigé vers l'extrémité axiale du fourreau, un joint annulaire étant inséré entre le décrochement du fourreau et l'extrémité axiale de l'embout, et dans lequel l'un du manchon et de l'élément récepteur est muni d'au moins une saillie sur l'une de ses surfaces, tandis que l'autre est muni d'au moins une découpe apte à recevoir la saillie pour immobiliser axialement le manchon et l'élément récepteur.

Toutefois, ce dispositif nécessite, pour offrir une résistance à la traction convenable tout en laissant la possibilité de déconnecter l'embout et l'élément récepteur, une pièce supplémentaire montée à coulissement entre l'embout et le manchon.

La présente invention a pour but d'éliminer les inconvénients de la technique antérieure.

A cette fin, la présente invention propose un dispositif de raccordement, étanche aux fluides, comprenant :
- un embout présentant une partie tubulaire cylindrique,
- un manchon fendu sur sa longueur ayant un diamètre interne sensiblement complémentaire du diamètre externe de la partie tubulaire de l'embout, en vue d'être enfilé sur la partie tubulaire de l'embout,
- un élément récepteur comprenant au moins un fourreau cylindrique dont le diamètre interne est sensiblement complémentaire du diamètre externe du manchon, en vue d'accueillir l'embout muni du manchon, le fourreau étant étagé intérieurement pour définir un décrochement dirigé vers l'extrémité axiale du fourreau,
- un joint annulaire inséré entre le décrochement du fourreau et l'extrémité axiale de l'embout,
dans lequel l'un du manchon et de l'élément récepteur est muni d'au moins une saillie sur l'une de ses surfaces, tandis que l'autre est muni d'au moins une découpe apte à recevoir la saillie pour immobiliser axialement le manchon et l'élément récepteur,
caractérise en ce que l'embout est muni en extrémité d'un bourrelet annulaire, en ce que le manchon possède une élasticité suffisante pour franchir élastiquement le bourrelet par ouverture de la fente et être retenu sur l'embout par butée d'une extrémité axiale du manchon sur le bourrelet annulaire, et en ce que chaque découpe est une découpe à bords convergeants qui débouche sur une face axiale de l'élément dans lequel elle est ménagée.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1 représente une vue schématique en perspective éclatée d'un dispositif de raccordement conforme à un mode de réalisation de la présente invention,
- la figure 2 représente une vue schématique en coupe axiale selon un plan de coupe référencé II-II du même dispositif en position assemblée, et
- les figures 3, 4 et 5 représentent des vues similaires en coupe axiale de trois variantes de réalisation du dispositif de raccordement conforme à la présente invention représenté sur la figure 1,
- la figure 6 représente une vue schématique en perspective éclatée d'un dispositif de raccordement conforme à un autre mode de réalisation de la présente invention,
- la figure 7 représente une vue partielle en coupe axiale du dispositif de raccordement conforme à cet autre mode de réalisation de la présente invention,
Pour l'essentiel le dispositif de raccordement conforme à la présente invention comprend un embout 100, un manchon fendu longitudinalement 200, une pièce de jonction 300 et, de préférence, un joint annulaire 400.

L'embout 100 est formé d'un tube cylindrique 102 muni à son extrémité, et sur sa surface externe, d'un bourrelet annulaire 104. Ce bourrelet 104 peut prendre des formes diverses. Le bourrelet 104 peut être par exemple torique ou tronconique. L'axe du tube 102 est référencé 120 sur les figures annexées.

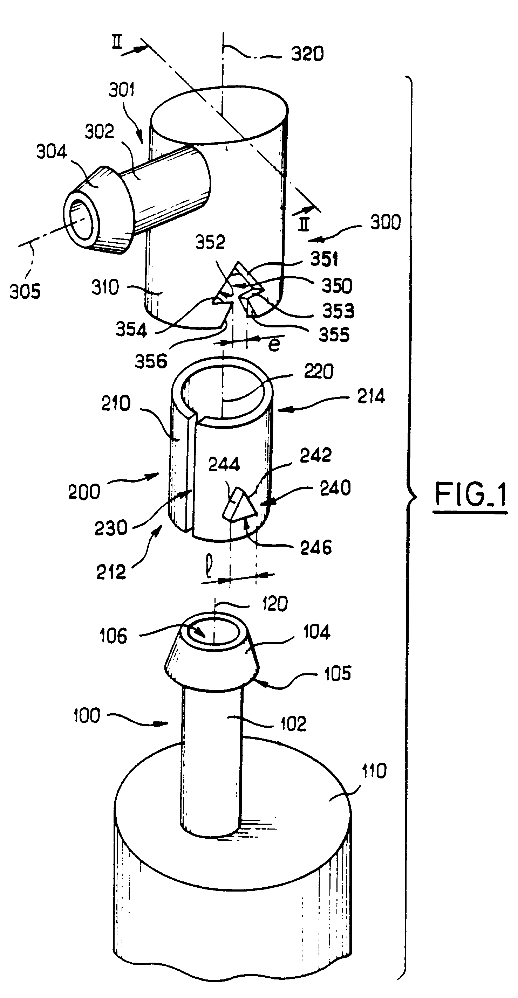

On va dans un premier temps décrire la structure du dispositif de raccordement représenté sur la figure 1.

Selon la représentation donnée sur la figure 1, le manchon 200 est formé pour l'essentiel d'un cylindre 210 de diamètre interne constant et de diamètre externe constant. Son diamètre interne est sensiblement complémentaire du diamètre externe du tube 102, soit inférieur au plus grand diamètre du bourrelet 104. Le manchon 200 est muni d'une fente 230 généralement longitudinale, c'est-à-dire généralement parallèle à l'axe 220 du manchon 200. La fente 230 s'étend sur toute la longueur du manchon 200 et sur toute l'épaisseur de celui-ci selon le mode de réalisation représenté sur la figure 1.

Par ailleurs, le manchon possède une élasticité suffisante pour franchir élastiquement le bourrelet 104, par ouverture de la fente 230.

Le manchon fendu 200 est muni sur sa surface externe, d'au moins une saillie 240. Cette saillie 240 est avantageusement réalisée au voisinage de l'extrémité axiale 212 du manchon 200 opposée au bourrelet 104. Sur la figure 1, la seconde extrémité axiale du manchon 200, destinée à reposer contre le bourrelet 104 à l'utilisation, est référencée 214
Par ailleurs, de préférence, il est prévu plusieurs saillies 240, équi-réparties autour de l'axe du manchon 200, sur la surface externe de celui-ci.

Selon un mode de réalisation très préférentiel, chaque saillie 240, en vue latérale de l'extérieur, a un contour généralement triangulaire. Plus précisément encore, de préférence, chaque saillie 240 est formée de trois faces 242, 244 et 246. Ces trois faces 242, 244 et 246 sont perpendiculaires à la surface externe du manchon 200. Les faces 242 et 244 sont symétriques par rapport à un plan passant par l'axe du manchon. Elles convergent en éloignement de l'extrémité axiale 212 du manchon 200. Les faces 242 et 244 se rejoignent dans le plan de symétrie précité. La troisième face 246, qui relie les faces 242 et 244, s'étend perpendiculairement à l'axe 220 du manchon 200. La face 246 est dirigée vers l'extrémité axiale 212 du manchon 200.

La pièce de jonction 300 comprend au moins un fourreau cylindrique 310. Le fourreau 310 possède un diamètre interne complémentaire du diamètre externe du manchon fendu 200. Le fourreau 310 est pourvu d'au moins une découpe 350 destinée à recevoir une saillie 240 précitée. Le nombre de découpes 350 prévues sur le fourreau 310 doit correspondre au nombre de saillies 240 prévu sur le manchon 200. De plus, la répartition des découpes 350 autour de l'axe 320 du fourreau 310 doit coïncider avec la répartition des saillies 240 autour de l'axe 220 du manchon.

De préférence chaque découpe 350 ménagée sur la pièce de jonction 300 est une découpe ouverte à bords convergents qui débouche sur une face axiale du fourreau. Chaque découpe 350 a avantageusement un contour général triangulaire complémentaire de la saillie 240.

Selon le mode de réalisation illustré sur les figures annexées, chaque découpe 350 est délimitée par trois faces. Deux de ces faces sont référencées 351, 352, tandis que la troisième face est formée de deux facettes 353, 354, coplanaires. Les deux faces 351, 352, sont symétriques par rapport à un plan passant par l'axe 320 du fourreau 310. Les faces 351, 352, convergent en éloignement de l'extrémité axiale du fourreau 310. Elle se rejoignent au niveau du plan de symétrie axiale précité. Les deux facettes coplanaires 353, 354, définissent la face ouverte de la découpe 350. Les facettes 353, 354 s'étendent perpendiculairement à l'axe 320. Les facettes 353, 354 sont par ailleurs reliées à l'extrémité axiale du fourreau 310 par l'intermédiaire de faces auxiliaires 355, 356. Les faces auxiliaires 355, 356, divergent en rapprochement de l'extrémité axiale du fourreau 310.

La largeur e de l'ouverture de la découpe 350 définie entre les facettes 353 et 354 doit être inférieure à la longueur l de la face 246 de la saillie 240 (la largeur e de l'ouverture et la longueur l précitées sont considérées dans un plan perpendiculaire aux axes du manchon fendu 200 et du fourreau 310).

Par ailleurs, la chambre interne du fourreau 310 est étagée. Plus précisément, elle possède un diamètre réduit, vers l'intérieur du fourreau 310, afin de définir un décrochement 360 dirigé vers l'extrémité axiale précitée du fourreau. Le décrochement 360 sert d'appui au joint annulaire 400 précité.

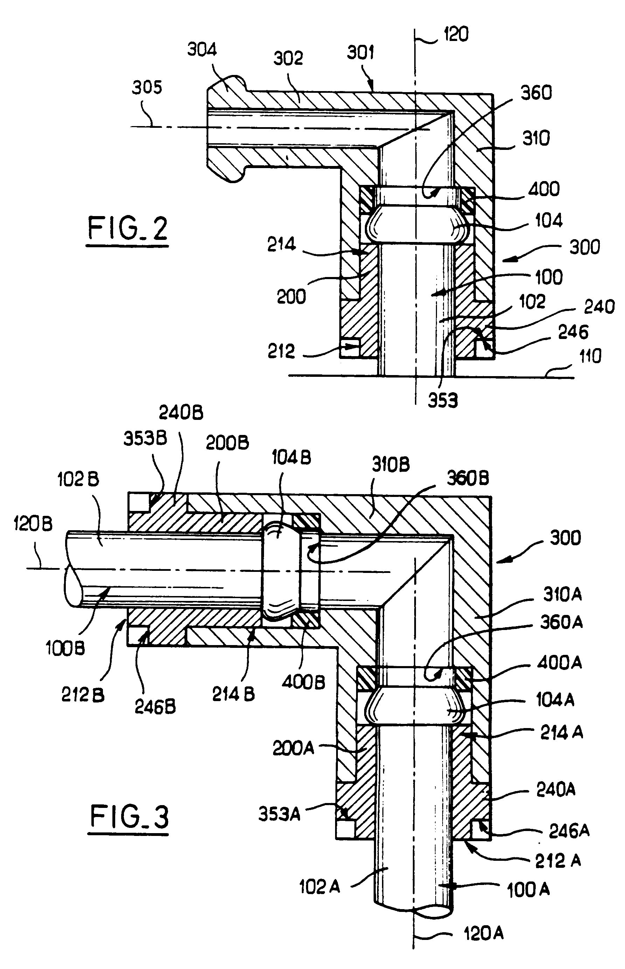

La pièce de jonction peut prendre par ailleurs de nombreuses formes. Selon le mode de réalisation illustré sur les figures 1 et 2, le volume interne du fourreau 310 peut communiquer, de façon étanche, avec un embout auxiliaire 301. Cet embout 301, de façon comparable à l'embout 100 précité, est formé d'un tube cylindrique 302 muni à son extrémité, et sur sa surface externe d'un bourrelet annulaire 304.

Plus précisément encore, selon le mode de réalisation illustré sur les figures 1 et 2, l'embout auxiliaire s'étend radialement par rapport à l'axe 320 du fourreau 310. D'autres formes de réalisation de la pièce de jonction 300 seront évoquées par la suite en regard des figures 3, 4 et 5.

Pour utiliser le dispositif de raccordement conforme à la présente invention, on procède comme suit.

Dans un premier temps, le manchon fendu 200 est engagé sur l'embout 100. Pour cela, le manchon 200 est poussé sur le bourrelet 104. Il franchit élastiquement celui-ci grâce à l'ouverture possible de la fente 230. Lorsque le manchon 200 a franchi le bourrelet 104, il reprend son diamètre initial complémentaire du tube 102.

Puis, la pièce de jonction 300 est engagée sur le manchon 200. Pour cela, il convient de veiller à aligner chaque saillie 240 sur une ouverture 350.

Les faces auxiliaires évasées 356 et 355 facilitent l'insertion de chaque saillie 240, dans une découpe 350, par déformation élastique de la matière du fourreau 310 au niveau des facettes 353 et 354.

Lorsque la saillie 240 a franchi l'ouverture de largeur e d'une découpe 350, la matière élastique du fourreau 310 reprend sa forme initiale et la saillie 240 est ainsi emprisonnée. De ce fait, il est défini une immobilisation axiale entre le manchon fendu 200 et le fourreau 300, grâce au contact défini entre la face 246 de la saillie 240 et les facettes 353 et 354 de la découpe 350. Dans cette position, l'extrémité axiale 214 du manchon 200 vient reposer contre la face 105 du bourelet 104 dirigée vers le tube 102. Le décrochement 360 prévu sur le fourreau 310 fait face à l'extrémité axiale 214 du manchon 200 et est placé en regard du bourrelet 104, sur l'extérieur de celui-ci.

Un joint annulaire 400 préalablement inséré dans le fourreau 310, avant engagement de celui-ci sur le manchon 200, est ainsi pincé entre le décrochement 360 et le bourrelet 104, comme illustré sur les figures annexées.

Il est ainsi défini une liaison étanche entre le canal interne 106 de l'embout 100 et le volume interne du fourreau 310.

Après assemblage, l'axe 120 de l'embout 100, l'axe 220 du manchon fendu 200 et l'axe 320 du fourreau 310 sont coaxiaux.

L'homme de l'art comprendra aisément que la position axiale de chaque saillie 240 par rapport à l'extrémité axiale 214 du manchon 200, et la distance axiale séparant le décrochement 360 de chaque découpe 250 sur le fourreau 310 doivent être adaptées en fonction de l'étendue axiale du bourrelet 104 de telle sorte que, après assemblage, le joint annulaire 400 soit au moins légèrement comprimé.

On notera, et c'est là un avantage important du dispositif de raccordement conforme à la présente invention que, après assemblage du dispositif de raccordement, la pièce de jonction 300 équipée par exemple d'un embout auxiliaire 301 est susceptible de rotation autour de l'axe 120 de l'embout principal 100, tout en garantissant l'étanchéité aux fluides.

Le dispositif de raccordement qui vient d'être décrit peut par exemple trouver application dans le raccordement sur un embout 100 ménagé sur un corps 110 de pompe à essence de véhicules automobiles. Dans ce cas, l'embout 301 s'étendant radialement sur le fourreau 310 de la pièce de jonction 100 reçoit une durite de liason.

Un tel dispositif de raccordement est peu encombrant, fiable et autorise une orientation angulaire quelconque de la durite fixée sur l'embout auxiliaire 301, autour de l'axe 120 de l'embout principal 100. Selon une caractéristique avantageuse de la présente invention, le manchon fendu 200 et la pièce de jonction 300 sont réalisés par moulage de matière plastique, très avantageusement de polyacétal (le polyacétal est avantageux en raison de sa souplesse et de sa bonne résistance aux hydrocarbures).

Selon le mode de réalisation précité, la pièce de jonction 300 comprend un fourreau 310 et un embout auxiliaire 301. La pièce de jonction 300 peut faire l'objet de nombreux autres modes de réalisation.

Le cas échéant, la pièce de jonction 300 peut être formée de plusieurs fourreaux 310 aptes à coopérer avec des manchons fendus respectifs 200 pour assurer une liaison étanche entre différents embouts principaux 100.

Ainsi, par exemple on a illustré sur la figure 3 une variante de réalisation dans laquelle la pièce de jonction 300 est formée de deux fourreaux 310A, 310B, orthogonaux, qui communiquent entre eux. Les fourreaux 310A et 310B coopèrent respectivement avec des manchons fendus 200A et 200B engagés sur des embouts principaux respectifs 100A et 100B.

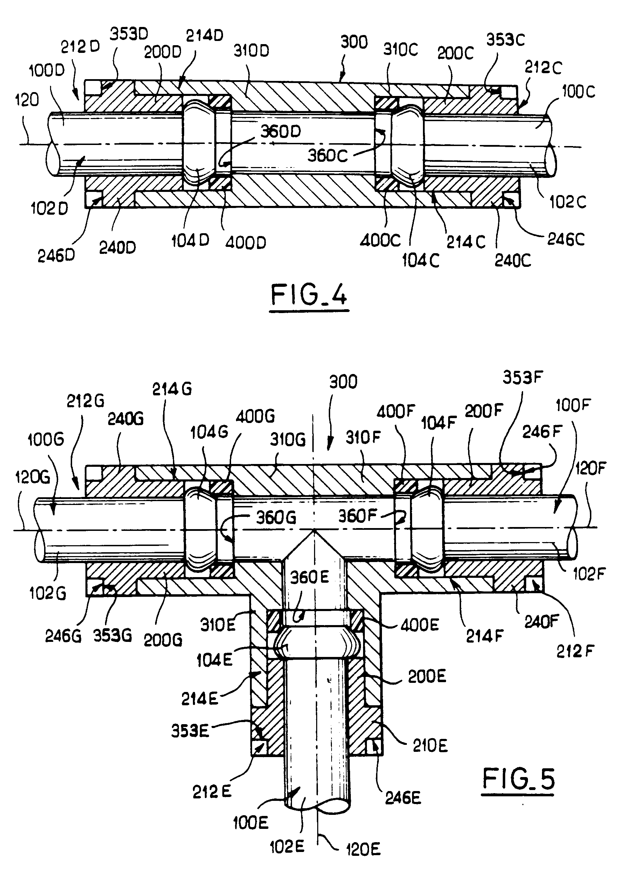

On a illustré sur la figure 4 une autre variante de réalisation selon laquelle la pièce de jonction 300 est formée de deux fourreaux coaxiaux 310C, 310D. Les fourreaux 310C, 310D coopèrent avec des manchons fendus respectifs 200C, 200D engagés sur des embouts principaux 100C et 100D.

Enfin, on a illustré sur la figure 5 une variante de réalisation selon laquelle la pièce de jonction 300 est formée de trois fourreaux cylindriques 310E, 310F et 310G disposés en T et communiquant entre eux. Les fourreaux 310E, 310F, 310G, coopèrent respectivement avec des manchons fendus 200E, 200F et 200G engagés sur des embouts principaux respectifs 100E, 100F et 100G.

Les fourreaux 310A, 310B ; 310C, 310D ; 310E, 310F et 310G, ainsi que les manchons fendus 200A, 200B ; 200C, 200D ; 200E, 200F, 200G, précités sont respectivement identiques au fourreau 310 et au manchon fendu 200 précédemment décrits en regard des figures 1 et 2. Pour cette raison, la structure des fourreaux 310 et des manchons fendus 200 illustrée sur les figures 3, 4 et 5 ne sera pas décrite plus en détail par la suite. On notera que sur les figures 3, 4 et 5 les éléments représentés portent des références numériques identiques à celles utilisées en regard des figures 1 et 2, assorties cependant d'indice A, B, C, D, E, F ou G.

Bien entendu d'autres formes de réalisation de la pièce de liaison 300 peuvent être encore envisagées.

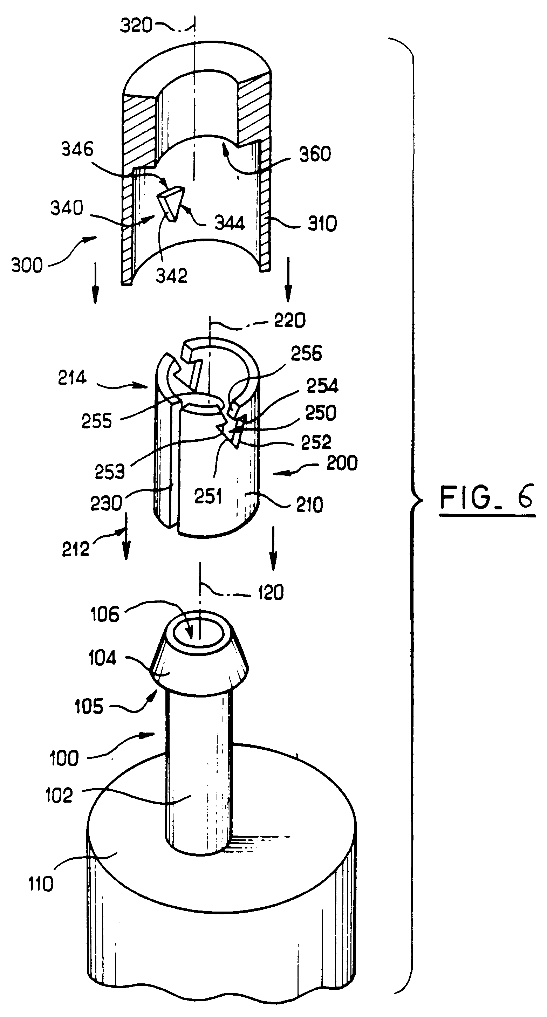

Le mode de réalisation représenté sur la figure 6 diffère de celui représenté sur la figure 1 par le fait que les saillies et découpes complémentaires sont inversées. C'est-à-dire que des saillies 340 sont prévues sur la surface interne du fourreau 310, tandis que des découpes complémentaires 250 sont ménagées dans le manchon 200.

De préférence, chaque saillie 340 possède un contour triangulaire délimité par des surfaces 342, 344 et 346 homologues des surfaces 242, 244 et 246 précitées.

Les surfaces 342, 344 convergent en rapprochement de l'extrémité axiale du fourreau 310. Elles se rejoignent dans un plan de symétrie passant par l'axe 320 du fourreau. La surface 346 est perpendiculaire à l'axe 320 du fourreau 300.

De même chaque découpe 250 est de préférence délimitée par trois faces dont deux sont référencées 251, 252 et la troisième est formée de deux facettes coplanaires référencées 253, 254. Les deux faces 251, 252 sont symétriques par rapport à un plan passant par l'axe 220 du manchon 220. Elles convergent en éloignement de l'extrémité axiale 214 du manchon 200. Elles se rejoignent au niveau du plan de symétrie axiale précité. Les faces 253, 254 s'étendent perpendiculairement à l'axe 220 du manchon 200. Elles sont reliées à l'extrémité axiale 214 du manchon 200 par des faces auxiliaires 255, 256 qui divergent en rapprochement de cette extrémité axiale 214.

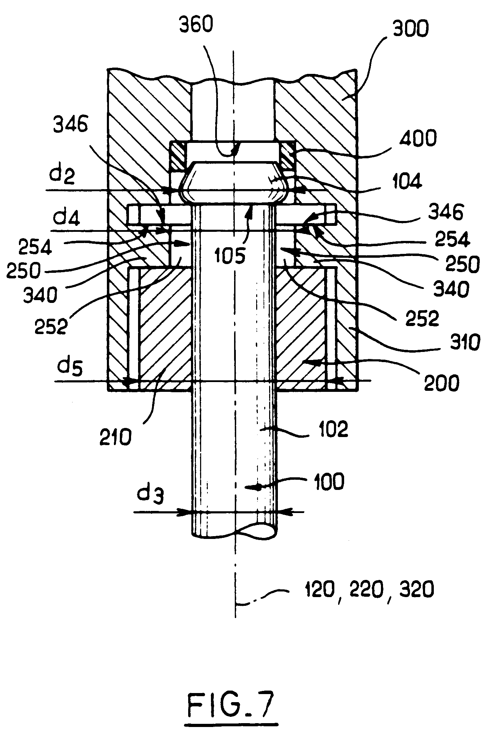

On notera que comme illustré sur la figure 7, pour permettre un engagement des saillies 340 dans les découpes 250, d'une part, le diamètre d4 de la section libre interne du fourreau 310, au niveau des saillies 340, doit être supérieur au plus grand diamètre d2 du bourrelet 104, d'autre part, le diamètre externe d5 du manchon doit être supérieur au plus grand diamètre d2 du bourrelet 104, tandis que le diamètre interne du manchon 200 est complémentaire du diamètre externe d3 du tube 102.

Selon une autre variante, on peut prévoir des saillies 240 et des découpes 250 dans le manchon 200 et des découpes 350 et des saillies 340 complémentaires dans le fourreau 310.

Selon les modes de réalisation représentes sur les figures 1 et 6, l'étanchéité était assurée entre l'embout 100 et la pièce de liaison 300.

## Revendications

1. Dispositif de raccordement, étanche aux fluides, du type comprenant :
- un embout (100) présentant une partie tubulaire cylindrique (102),
- un manchon (200) fendu sur sa longueur ayant un diamètre interne sensiblement complémentaire du diamètre externe de la partie tubulaire (102) de l'embout, en vue d'être enfilé sur la partie tubulaire de l'embout,
- un élément récepteur (300) comprenant au moins un fourreau cylindrique dont le diamètre interne est sensiblement complémentaire du diamètre externe du manchon, en vue d'accueillir l'embout muni du manchon, le fourreau étant étagé intérieurement pour définir un décrochement dirigé vers l'extrémité axiale du fourreau,
- un joint annulaire inséré entre le décrochement du fourreau et l'extrémité axiale de l'embout,
dans lequel l'un du manchon et de l'élément récepteur est muni d'au moins une saillie sur l'une de ses surfaces, tandis que l'autre est muni d'au moins une découpe apte à recevoir la saillie pour immobiliser axialement le manchon et l'élément récepteur,
caractérisé en ce que l'embout est muni en extrémité d'un bourrelet annulaire, en ce que le manchon possède une élasticité suffisante pour franchir élastiquement le bourrelet par ouverture de la fente et être retenu sur l'embout par butée d'une extrémité axiale du manchon sur le bourrelet annulaire, et en ce que chaque découpe est une découpe à bords convergeants qui débouche sur une face axiale de l'élément dans lequel elle est ménagée.

2. Dispositif de raccordement selon la revendication 1, caractérisé par le fait que l'élément récepteur est une pièce de jonction (300) qui comprend au moins un embout secondaire qui communique avec la chambre interne du fourreau (310).

3. Dispositif de raccordement selon la revendication 1 ou 2, caractérisé par le fait que la saillie (240) est prévue sur la surface externe du manchon (200) et que la découpe (350) est ménagée dans la pièce de jonction (300).

4. Dispositif de raccordement selon la revendication 1 ou 2, caractérisé par le fait que la saillie (340) est prévue sur la surface interne du fourreau (310) et que la découpe (250) est ménagée dans le manchon (200).

5. Dispositif de raccordement selon l'une des revendications 1 à 4, caractérisé par le fait que chaque découpe (250, 350) a un contour général triangulaire délimité par deux faces (251, 252 ; 351, 352) généralement symétriques d'un plan axial, qui divergent en rapprochement d'une face axiale de l'élément dans lequel elle est ménagée et par une face ouverte (253, 254 ; 353, 354) généralement perpendiculaire à l'axe (220, 320) de cet élément et qui elle-même est reliée avec ladite face axiale de l'élément par deux faces secondaires (255, 256 ; 355, 356) qui divergent en rapprochement de celle-ci, tandis que chaque saillie (240, 340) prévue sur l'autre élément a un contour général triangulaire complémentaire de la découpe (250, 350).

6. Dispositif de raccordement selon l'une des revendications 1 à 5, caractérisé par le fait que la pièce de jonction (300) comprend plusieurs fourreaux cylindriques (310A, 310B ; 310C, 310D ; 310E, 310F, 310G) communiquant entre eux de façon étanche, aptes à coopérer respectivement avec un manchon fendu (200A, 200B ; 200C, 200D ; 200E, 200F, 200G).

7. Dispositif de raccordement selon l'une des revendications 1 à 6, caractérisé par le fait que la pièce de jonction (300) comprend plusieurs fourreaux cylindriques (310A, 310B) perpendiculaires entre eux et qui communiquent entre eux.

8. Dispositif de raccordement selon l'une des revendications 1 à 6, caractérisé par le fait que la pièce de jonction (300) comprend plusieurs fourreaux cylindriques (310C, 310D) coaxiaux et qui communiquent entre eux.

9. Dispositif de raccordement selon l'une des revendications 1 à 6, caractérisé par le fait que la pièce de jonction (300) comprend trois fourreaux cylindriques (310E, 310F, 310G) disposés en "T" et qui communiquent entre eux.

## Claims

1. Fluidtight connector device, of the type comprising:
- a ferrule (100) with a cylindrical tubular part (102),
- a sleeve (200) split along its length, having an internal diameter approximately complementary to the external diameter of the tubular part (102) of the ferrule, for the purpose of being slipped onto the tubular part of the ferrule,
- a receiving member (300) comprising at least one cylindrical sheath, the internal diameter of which is approximately complementary to the external diameter of the sleeve, for the purpose of receiving the ferrule fitted with the sleeve, the sheath being stepped internally so as to define a shoulder directed towards the axial end of the sheath,
- an annular joint inserted between the shoulder in the sheath and the axial end of the connecting ferrule,
in which either the sleeve or the receiving member has at least one projection on one of its surfaces, whilst the other has at least one cutout suitable for receiving the projection in order to immobilise the sleeve and receiving element axially,
characterised in that the ferrule has at its end an annular collar, in that the sleeve has sufficient elasticity to pass over the collar elastically by means of opening of the slot and be held on the ferrule by means of an axial end of the sleeve bearing on the annular collar, and in that each cutout is a cutout with converging edges which opens out on an axial face of the member in which it is provided.

2. Connector device according to Claim 1, characterised by the fact that the receiving member is a joining piece (300) which comprises at least one secondary ferrule communicating with the internal chamber of the sheath (310).

3. Connector device according to Claim 1 or 2, characterised by the fact that the projection (240) is provided on the external surface of the sleeve (200) and that the cutout (350) is provided in the joining piece (300).

4. Connector device according to Claim 1 or 2, characterised by the fact that the projection (340) is provided on the internal surface of the sheath (310) and that the cutout (250) is provided in the sleeve (200).

5. Connector device according to one of Claims 1 to 4, characterised by the fact that each cutout (250, 350) has an overall triangular outline defined by two faces (251, 252; 351, 352) generally symmetrical about an axial plane and which diverge as they approach an axial face of the member in which it is provided, and by an open face (253, 254; 353, 354) at right angles overall to the axis (220, 320) of this member and which is itself connected to the said axial face of the member by two secondary faces (255, 256; 355, 356) which diverge as they approach it, whilst each projection (240, 340) provided on the other member has an overall triangular outline complementary to the cutout (250, 350).

6. Connector device according to one of Claims 1 to 5, characterised by the fact that the joining piece (300) comprises several cylindrical sheaths (310A, 310B; 310C, 310D; 310E, 310F, 310G) communicating with each other in a fluidtight manner, suitable for interacting respectively with a split sleeve (200A, 200B; 200C, 200D; 200E, 200F, 200G).

7. Connector device according to one of Claims 1 to 6, characterised by the fact that the joining piece (300) comprises several cylindrical sheaths (310A, 310B) at right angles to each other and which communicate with each other.

8. Connector device according to one of Claims 1 to 6, characterised by the fact that the joining piece (300) comprises several coaxial cylindrical sheaths (310C, 310D) communicating with each other.

9. Connector device according to one of Claims 1 to 6, characterised by the fact that the joining piece (300) comprises three cylindrical sheaths (310E, 310F, 310G) disposed in a "T" and which communicate with each other.

## Patentansprüche

1. Fluiddichte Kupplungsvorrichtung mit:
- einem Nippel (100), der einen rohrförmigen zylindrischen Teil (102) aufweist,
- einer Muffe (200), die über ihre Länge geschlitzt ist und einen Innendurchmesser hat, der im Hinblick darauf, daß sie auf den rohrförmigen Teil des Nippels aufgeschoben wird, einen Innendurchmesser hat, der im wesentlichen dem Außendurchmesser des rohrförmigen Teils (102) des Nippels komplementär ist,
- einem Aufnahmeelement (300), das wenigstens eine zylindrische Hülse umfaßt, deren Innendurchmesser im Hinblick darauf, daß es den Nippel mit der Muffe aufnimmt, einen Innendurchmesser hat, der im wesentlichen dem Außendurchmesser der Muffe komplementär ist, wobei die Hülse innen abgestuft ausgebildet ist, so daß ein Absatz gebildet ist, der zum axialen Ende der Hülse führt, und
- einer Ringverbindung, die zwischen dem Absatz der Hülse und dem axialen Ende des Nippels eingesetzt ist, wobei die Muffe oder das Aufnahmeelement mit wenigstens einem Vorsprung an einer seiner Oberflächen versehen ist, während das jeweils andere Bauteil mit wenigstens einer Ausnehmung versehen ist, die den Vorsprung aufnehmen kann, um die Muffe und das Aufnahmeelement axial festzulegen, dadurch gekennzeichnet, daß der Nippel an einem Ende mit einer Ringwulst versehen ist, daß die Muffe eine Elastizität aufweist, die ausreicht, um elastisch über die Wulst zu gehen, indem der Schlitz geöffnet wird, und am Nippel durch die Anlage eines axialen Endes der Muffe an der Ringwulst festgehalten zu werden, und daß die Ausnehmung eine Ausnehmung mit zusammenlaufenden Rändern ist, die an einer Axialfläche des jeweiligen Elementes mündet, an dem sie vorgesehen ist.

2. Kupplungsvorrichtung nach Anspruch 1, dadurch gekennzeichnet, daß das Aufnahmeelement ein Anschlußstück (300) ist, daß wenigstens einen zweiten Nippel umfaßt, der mit dem Innenraum der Hülse (310) verbunden ist.

3. Kupplungsvorrichtung nach Anspruch 1 oder 2, dadurch gekennzeichnet, daß der Vorsprung (240) an der Außenfläche der Muffe (200) vorgesehen ist und daß die Ausnehmung (350) im Anschlußstück (300) ausgebildet ist.

4. Kupplungsvorrichtung nach Anspruch 1 oder 2, dadurch gekennzeichnet, daß der Vorsprung (340) an der Innenfläche der Hülse (310) vorgesehen ist und daß die Ausnehmung (215) in der Muffe (200) ausgebildet ist.

5. Kupplungsvorrichtung nach einem der Ansprüche 1 - 4, dadurch gekennzeichnet, daß jede Ausnehmung (250, 350) eine im wesentlichen dreieckige Form hat, die von zwei Flächen (251, 252; 351, 352), die im wesentlichen symmetrisch zu einer Axialebene verlaufen und in Richtung einer Axialfläche des jeweiligen Elementes auseinanderlaufen, in dem sie vorgesehen ist, und von einer offenen Fläche (253, 254; 353, 354) begrenzt wird, die im wesentlichen senkrecht zu der Achse (220, 320) dieses Elementes verläuft, und die ihrerseits mit dieser Axialfläche des Elementes über zwei sekundäre Flächen (255, 256; 355, 356) verbunden ist, die in Richtung auf diese Fläche auseinanderlaufen, wobei jeder Vorsprung (240, 340), der an dem anderen Element vorgesehen ist, eine im wesentlichen dreieckige Form hat, die der Ausnehmung (250, 350) komplementär ist.

6. Kupplungsvorrichtung nach einem der Ansprüche 1 - 5, dadurch gekennzeichnet, daß das Anschlußstück (300) mehrere zylindrische Hülsen (310A, 310B; 310C, 310D; 310E, 310F, 310G) umfaßt, die dicht miteinander in Verbindung stehen und jeweils mit einer geschlitzten Muffe (200 A, 200B; 200C, 200D; 200E, 200F, 200G) zusammenarbeiten können.

7. Kupplungsvorrichtung nach einem der Ansprüche 1 - 6, dadurch gekennzeichnet, daß das Anschlußstück (300) mehrere zylindrische Hülsen (310A, 310B) umfaßt, die zueinander senkrecht verlaufen und miteinander verbunden sind.

8. Kupplungvorrichtung nach einem der Ansprüche 1 - 6, dadurch gekennzeichnet, daß das Anschlußstück (300) mehrere zylindrische Hülsen (310C, 310D) umfaßt, die koaxial verlaufen und miteinander verbunden sind.

9. Kupplungsvorrichtung nach einem der Ansprüche 1 - 6 dadurch gekennzeichnet, daß das Anschlußstück (300) drei zylindrische Hülsen (310E, 310F, 310G) umfaßt, die T-förmig angeordnet sind und miteinander in Verbindung stehen.
